# EUROPÄISCHE PATENTANMELDUNG

(11) **EP 0 846 598 A2**
(43) Veröffentlichungstag der Anmeldung: **10.06.1998**
(21) Anmeldenummer: 97121457.2
(22) Anmeldetag: 05.12.1997
(51) Int. Cl.: B60R 1/12

(54) **Innenspiegel für ein Kraftfahrzeug**

(30) Priorität: 06.12.1996 DE 29621171 U
(71) Anmelder: Donnelly Hohe GmbH & Co. KG, 97903 Collenberg (DE)
(72) Erfinder: Thau, Wolfgang, 58285 Gevelsberg (DE); Hempel, Thomas, 71711 Steinheim (DE); Polzer, Herwig, 63879 Miltenberg (DE)
(74) Vertreter: Zinngrebe, Horst, Dr.rer.nat.

(57) **Zusammenfassung**

Beschrieben wird ein Innenspiegel für ein Kraftfahrzeug mit einem Spiegelgehäuse und einem Tragarm, durch den ein mit der Fahrzeugelektrik verbundenes Stromversorgungskabel in das Innere des Spiegelgehäuses geführt ist. Um das Aufzeichnen kurzer Nachrichten zu erleichtern, ist vorgesehen, daß im Spiegelgehäuse (2) eine Sprachspeichereinheit (11) aufgenommen ist, an die ein in das Spiegelgehäuse (2) integriertes Mikrofon (4) und ein im Spiegelgehäuse (2) angeordneter Lautsprecher (12) angeschlossen sind.

## Beschreibung

Die Erfindung betrifft einen Innenspiegel für ein Kraftfahrzeug mit einem Spiegelgehäuse und einem hohlen Tragarm, durch den ein mit der Fahrzeugelektrik verbundenes Stromversorgungskabel in das Innere des Spiegelgehäuses geführt ist.

Das Aufzeichnen von kurzen Nachrichten im Fahrzeug ist mit erheblichen Umstanden verbunden. Während der Fahrt ist das Aufschreiben der Nachricht nicht möglich. Beim verkehrsbedingten Halten ist nicht genügend Zeit vorhanden, sich Notizen zu machen und beim Parken ist oft kein Schreibzeug zur Hand bzw. bei gleichzeitigem Telefonieren keine Hand frei für das Festhalten von Notizen.

Der Erfindung liegt daher die Aufgabe zugrunde, das Aufzeichnen von kurzen Nachrichten im Fahrzeug zu erleichtern.

Dazu ist bei dem eingangs genannten Innenspiegel erfindungsgemäß vorgesehen, daß im Spiegelgehäuse eine Sprachspeichereinheit aufgenommen ist, an die ein in das Spiegelgehäuse integriertes Mikrofon und ein im Spiegelgehäuse angeordneter Lautsprecher angeschlossen sind. Damit gelingt das Festhalten von Notizen selbst während der Fahrt, weil dazu lediglich die Aufnahme-/Wiedergabefunktion des Sprachspeichers zu betätigen ist. Zum Abhören des Aufgezeichneten etwa nach Beendigung der Fahrt ist an die Sprachspeichereinheit ein in das Innenspiegelgehäuse integrierter Lautsprecher angeschlossen.

In vorteilhafter Weise ist das Mikrofon so im Spiegel angeordnet, daß dessen Richtcharakteristik in Richtung des vom Fahrer ausgehenden Schallkegels weist. Gleichzeitig kann das Mikrofon schaltungstechnisch für die Funktion der Freisprecheinrichtung einer vorhandenen Funktelefonanlage mitbenutzt werden. Somit werden Fahr- und Nebengeräusche von der Aufnahme weitestgehend ausgeschlossen bzw. wirken sich nicht störend auf die Sprachaufnahme aus. Hierbei ist bei einer besonders bevorzugten Ausfühungsform vorgesehen, daß das Mikrofon im frontseitenfernen Spiegelgehäuserahmen angeordnet ist. Üblicherweise sind diese Spiegelgehäuserahmen nicht kantig sondern gerundet oder abgeflacht, so daß das Mikrofon von dem über dem Kopf des Fahrers angeordneten Spiegel schräg auf die Höhe des Kopfes des Fahrers gerichtet ist.

Bevorzugterweise ist die schallabstrahelnde Fläche der Lautsprecher in die Spiegelgehäuserückwand integriert, wobei die vom Lautsprecher erzeugten Schallwellen von der als Reflektionsfläche wirkenden Windschutzscheibe in Richtung Fahrer diffus reflektiert werden. Hierzu sieht das Spiegelgehäuse in seiner Rückwand entsprechende Schallaustrittsperforationen vor, wobei das Spiegelgehäuse als solches einen abgeschlossenen Raum darstellt, der den Wirkungsgrad des Lautsprechers durch Vermeiden eines akustischen Kurzschlusses erhöht.

Am Spiegelgehäuse, insbesondere an dem vorgenannten Spiegelgehäuserahmen sind zweckmäßig optische Signalmittel angeordnet. Damit kann der Fahrer, ohne vom Verkehrsgeschehen abgelenkt zu werden, leicht erkennen, in welchem Betriebszustand (Aufnahme/Wiedergabe) sich die Sprachspreichereinheit befindet. Bevorzugterweise sind am Spiegelgehäuse entsprechende Bedienungseinheiten angeordnet. Dies können Schalter, Taster oder Sensoren sein, die mechanisch betätigt werden oder durch Berührung reagieren. Damit kann der Fahrer die Sprachspeichereinheit in Betrieb setzen bzw. die Wiedergabeeinrichtung betätigen, ohne das Verkehrsgeschehen außer Acht zu lassen.

Es versteht sich, daß die Sprachspeicherung digital erfolgt, wobei die digitale Auslegung mit an sich bekannten elektronischen integrierten Schaltkreisen (IC) platzsparend gelöst werden kann, zum Beispiel mittels Schaltkreisen hoher Speicherdichte, die direkt auf einer Leiterplatte gebondet sein können.

Bevorzugterweise wird die Erfindung in Spiegeln eingesetzt, die bereits elektrische oder elektronische Bauteile beinhalten, um entweder auf das Spiegelglas Informationen zu übertragen oder dieses automatisch in Abblendstellung zu bringen. Hierzu werden durch den hohlen Arm, der das Spiegelgehäuse an der Fahrzeugkarosserie befestigt, Stromversorgungsleitungen geführt. Diese Versorgungsleitungen werden als Energieversorgungsleitungen für die erfindungsgemäßen Mitteln genutzt. Ferner ist in die Schaltung ein Lautstärkeregler integriert, der im Gehäuse angeordnet oder auch von außen zugängig sein kann. Ferner ist in der Schaltung dem Lautsprecher ein Verstärker vorgeschaltet.

Ansonsten sind zweckmäßige Weiterbildungen der Erfindung in den Unteransprüchen gekennzeichnet.

Die Erfindung wird nachstehend anhand der beigefügten Figuren erläutert. Dabei zeigen:

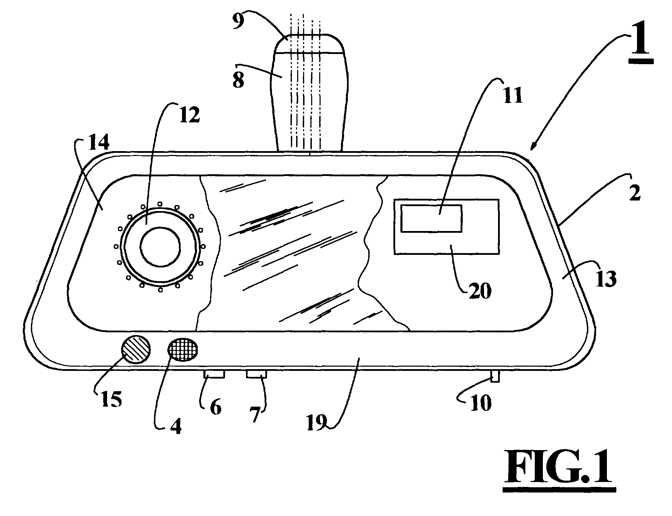

- Figur 1: eine Frontansicht des Spiegels mit teilweise aufgebrochenem Spiegelglas.

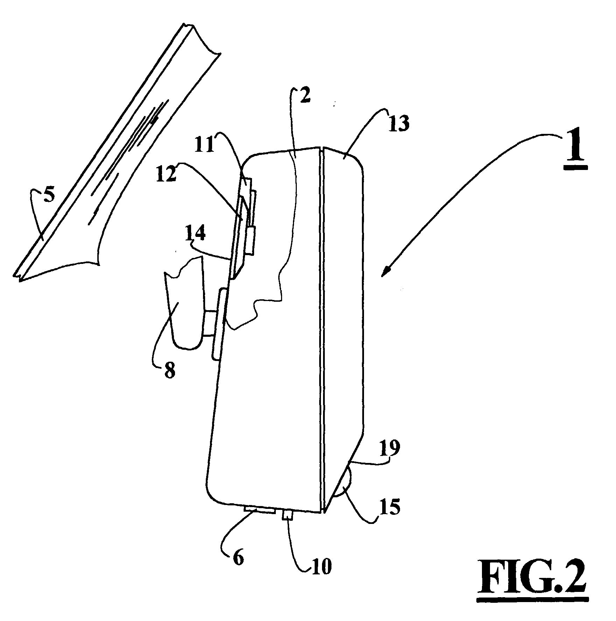

- Figur 2: eine Seitenansicht des Spiegels mit teilweise aufgebrochenem Gehäuse.
- Figur 3: einen Schaltplan

Die mit dem Bezugszeichen 11 bezeichnete Sprachspeichereinheit ist in das Gehäuse 2 eines im Ganzen mit 1 bezeichneten Innenspiegels eingebaut. Das Gehäuse 2 besitzt einen Spiegelgehäuserahmen 13, dessen unterer, waagrecht verlaufender Abschnitt eine geneigte Fläche 19 besitzt. Der Spiegelgehäuserahmen 13 besitzt in seiner geneigten Fläche 19 eine Durchbrechung, so daß hier eine Schalleintrittsmöglichkeit für ein dahinter angeordnetes Mikrofon 4 geschaffen ist. Ebenfalls auf der geneigten Fläche 19 des Spiegelgehäuserahmens 13 befindet sich eine weitere Durchbrechung, durch die ein optisches Betriebssignalmittel 15 hindurchtritt.

Auf der Innenseite der Spiegelgehäuserückwand 14 ist nahe zur Fahrerseite des Innenspiegels 1 ein Lautsprecher 12 angeordnet, dessen Schallaustritt gegen die schematisch angedeutete Frontscheibe 5 gerichtet ist. Hierzu sind entsprechende Durchbrechungen in die Gehäuserückwand 14 eingebracht. Durch die Neigung der Frontscheibe 5 wird der Schall aus dem Lautsprecher 12 nach unten und damit auch in Richtung des Fahrers gelenkt.

Im Stromversorgungskreis für die Sprachspeichereinheit 11 liegen Bedienungselemente 6 , 7 und 10, die zweckmäßig an der Unterseite des Spiegelgehäuses an der zum Fahrer weisenden Seite befestigt sind. Der Taster 6 dient der Stop-/Pausefunktion, während der Taster 7 Stop- und Reset-Funktion übernimmt. Der Taster 10 ist ein Umschalter, der von 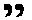 Play" auf 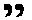 Record" umgestellt werden kann.

Der Stromversorgungskreis kann andere elektronische Baugruppen im Innenspiegel, sofern solche vorhanden sind, mit einbeziehen, wobei die zugehörigen elektrischen Versorgungsleitungen 9 durch den hohlen Tragarm 8 des Innenspiegels geführt sind. Es kommt jedoch auch in Betracht, daß die Stromversorgung der Sprachspeichereinheit von einer im Innenspiegel untergebrachten Batterie aus erfolgt. Ferner versteht es sich, daß für den Betrieb der Sprachspeichereinheit weitere Bedienungselemente (Vorlauf, Abspielen etc.) vorgesehen sein können, die ebenfalls im Griffbereich des Fahrers angeordnet sind.

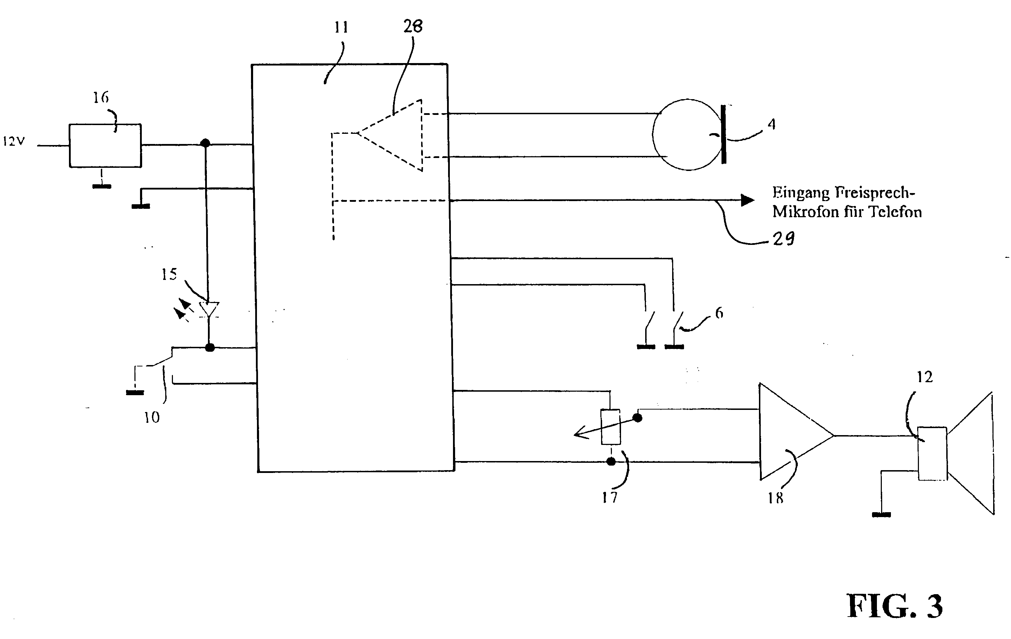

Figur 3 zeigt einen Schaltplan über die erfindungsgemäße Anordnung der Sprachspeichereinheit 11. Die zuvor verwendeten Bezugszeichen sind auch in Figur 3 angewendet. Der Sprachspeichereinheit 11 ist Spannungsgeber 16 vorgeschaltet, der die Bordnetzspannung eines PKWs auf die für die Sprachspeichereinheit 11 erforderliche Spannung reduziert. Mit dem Bezugszeichen 17 ist ein Lautstärkeregler bezeichnet, der sowohl im Innern des Spiegelgehäuses gekapselt sein kann oder durch einen Handregler von außen zugänglich ist. Mit dem Bezugszeichen 18 ist ein Verstärker bezeichnet, der die Ausgangssignale der Sprachspeichereinheit 11 am Lautstärkeregler 17 abgreift und für den Lautsprecher 12 aufbereitet. Als Betriebszustandsanzeige ist eine Leuchtdiode 15 an die Sprachspeichereinheit 11 angeschlossen. Die Sprachspeichereinheit 11, der Spannungsgeber 16, der Verstärker 18 und die Mikrofon-Schaltung 29 sind zu einer auf einer Leiterplatte 20 untergebrachten Baueinheit zusammengefaßt. Die Leiterplatte 20 ist im Spiegelgehäuse 2 an einer vom Lautsprecher 12 beabstandeten Stelle befestigt. Die Sprachspeichereinheit ist ein integrierter elektronischer Schaltkreis (IC), in welchem sich ein Vorverstärker 28 befindet. Nach Ausschluß des Mikrofons 4 an den Eingang des Vorverstärkers 28 paßt dieser die vom Mikrofon 4 aufgenommenen Signale dem Eingangswiderstand des Fahrzeugtelefons an. Damit wird das Mikrofon 4 Teil einer Freisprechanlage, die über ein einfaches Kabel 29 an den Ausgang des Vorverstärkers 28 angeschlossen werden kann.

## Patentansprüche

1. Innenspiegel für ein Kraftfahrzeug mit einem Spiegelgehäuse und einem Tragarm, durch den ein mit der Fahrzeugelektrik verbundenes Stromversorgungskabel in das Innere des Spiegelgehäuses geführt ist, dadurch gekennzeichnet, daß im Spiegelgehäuse (2) eine Sprachspeichereinheit (11) aufgenommen ist, an die ein in das Spiegelgehäuse (2) integriertes Mikrofon (4) und ein im Spiegelgehäuse (2) angeordneter Lautsprecher (12) angeschlossen sind.

2. Innenspiegel nach Anspruch 1, dadurch gekennzeichnet, daß das Mikrofon (4) mit seiner Empfangsfläche gegen den vom Fahrer ausgehenden Schallkegel gerichtet ist.

3. Innenspiegel nach Anspruch 1 oder 2, dadurch gekennzeichnet, daß das Mikrofon (4) in einem zur Frontscheibe (5) fernen Abschnitt (19) des Spiegelgehäuserahmens (13) angeordnet ist.

4. Innenspiegel nach einem der vorstehenden Ansprüche, dadurch gekennzeichnet, daß das Mikrofon (4) Teil einer Freisprecheinrichtung eines Fahrzeugtelefons ist.

5. Innenspiegel nach mindestens einem der Ansprüche 1 - 4, dadurch gekennzeichnet, daß der Lautsprecher (12) mit seiner Schallaustrittsfläche gegen die Innenfläche der Frontscheibe (5) gerichtet ist.

6. Innenspiegel nach Anspruch 5, dadurch gekennzeichnet, daß das Spiegelgehäuse (2) in seiner Rückwand (14) Schallaustrittsperforationen aufweist.

7. Innenspiegel nach mindestens einem der Ansprüche 1 - 6, dadurch gekennzeichnet, daß am Spiegelgehäuse (2) und/oder Spiegelgehäuserahmen (13) optische Betriebssignalmittel (15) angeordnet sind.

8. Innenspiegel nach mindestens einem der Ansprüche 1 - 7, dadurch gekennzeichnet, daß am Spiegelgehäuse (2), zweckmäßig an dessen Rahmen (13), Bedienungselemente (6, 7, 10) für die Sprachspeichereinheit (11) angeordnet sind.

9. Innenspiegel nach Anspruch 8, dadurch gekennzeichnet, daß die Bedienungselemente (6, 7, 10) Schalter (6, 7) oder Taster (10) oder Sensoren sind.

10. Innenspiegel nach einem der Ansprüche 1 - 9, dadurch gekennzeichnet, daß die Sprachspeichereinheit (11) digital ausgelegt ist.

11. Innenspiegel nach einem der Ansprüche 1 - 10, dadurch gekennzeichnet, daß der Lautsprecher (12) an einem dem Fahrer nahen Teil des Spiegelgehäuses (2) befestigt ist.

12. Innenspiegel nach mindestens einem der vorstehenden Ansprüche, dadurch gekennzeichnet, daß die Sprachspeichereinheit (11) mit einem Lautstärkeregler (17) gekoppelt ist.

13. Innenspiegel nach mindestens einem der vorstehenden Ansprüche, dadurch gekennzeichnet, daß dem Lautsprecher (12) ein Verstärker (18) vorgeschaltet ist.
